# EUROPEAN PATENT APPLICATION

(11) **EP 4 358 359 A1**
(43) Date of publication of application: **24.04.2024**
(21) Application number: 23197063.3
(22) Date of filing: 13.09.2023
(51) Int. Cl.: H02J 9/06

(54) **BRIDGE DEVICE COMMUNICATION INTERFACES TO BE COUPLED TO UPS AND BMS SYSTEMS**

(30) Priority: 15.09.2022 US 202263406794 P
(71) Applicant: Schneider Electric IT Corporation, Foxboro, MA 02035 (US)
(72) Inventor: LU, Bo, SHANGHAI (CN); SHAN, Chen Qi, SHANGHAI (CN); SONG, Huafeng, SHANGHAI (CN); LI, Shoufa, SHANGHAI (CN)
(74) Representative: Plasseraud IP

(57) **Abstract**

Examples of the disclosure include a bridge device having at least one communication interface configured to be coupled to at least one uninterruptible power supply (UPS) and to at least one battery system comprising a battery-management system (BMS), and at least one controller configured to receive a BMS-shutdown signal from the BMS, and output, in response to receiving the BMS-shutdown signal, a low-battery signal to the UPS to instruct the UPS to execute a safe shutdown procedure.

## Description

### BACKGROUND

### 1. Field of the Disclosure

At least one example in accordance with the present disclosure relates generally to power devices.

### 2. Discussion of Related Art

Power devices, such as uninterruptible power supplies (UPSs), may be used to provide regulated, uninterrupted power for sensitive and/or critical loads, such as computer systems and other data-processing systems. Existing UPSs include online UPSs, offline UPSs, line-interactive UPSs, as well as others. UPSs may provide output power to a load. The output power may be derived from a primary source of power, such as a utility-mains source, and/or derived from a back-up source of power, such as an energy-storage device.

### SUMMARY

According to at least one aspect of the present disclosure, an uninterruptible power supply (UPS) system is provided comprising a UPS configured to be coupled to at least one load, at least one battery system comprising a battery-management system (BMS) configured to output a BMS-shutdown signal, and a bridge device configured to receive the BMS-shutdown signal, and output a low-battery signal in response to receiving the BMS-shutdown signal, wherein the UPS is configured to execute a safe shutdown procedure in response to receiving the low-battery signal.

According to at least one example of the disclosure, a bridge device includes at least one communication interface configured to be coupled to at least one uninterruptible power supply (UPS) and to at least one battery system comprising a battery-management system (BMS), and at least one controller configured to receive a BMS-shutdown signal from the BMS, and output, in response to receiving the BMS-shutdown signal, a low-battery signal to the UPS to instruct the UPS to execute a safe shutdown procedure.

In at least one example, the bridge device includes at least one power interface configured to be coupled to at least one battery of the at least one battery system. In at least one example, the at least one controller is further configured to determine a discharge threshold of the at least one battery, and communicate the discharge threshold to the UPS. In at least one example, the BMS-shutdown signal is indicative of a charge level of the at least one battery, and the at least one controller is further configured to determine, based on the charge level of the at least one battery, whether the at least one battery is below a discharge threshold. In at least one example, the at least one controller is further configured to output the low-battery signal in response to determining that the at least one battery is below the discharge threshold.

In at least one example, the bridge device includes one or more sensors coupled to the at least one controller, and the at least one controller is further configured to determine, based on sensed information received from the one or more sensors, battery parameters indicative of a charge level of the at least one battery. In at least one example, the at least one controller is further configured to output the low-battery signal to the UPS responsive to determining that the battery parameters are indicative of the charge level of the at least one battery being below a discharge threshold. In at least one example, the at least one controller is further configured to communicate with the UPS to determine a model of the UPS.

In at least one example, the at least one controller is further configured to determine, based on the model of the UPS, a communication protocol to use to communicate with the UPS. In at least one example, the bridge device includes a spike-absorption circuit. In at least one example, the spike-absorption circuit includes at least one snubber circuit. In at least one example, the at least one snubber circuit is configured to absorb high-voltage spikes from the at least one battery system.

According to at least one example, at least one non-transitory computer-readable medium storing thereon sequences of computer-executable instructions for operating a bridge device having at least one communication interface configured to be coupled to at least one uninterruptible power supply (UPS) and to at least one battery system comprising a battery-management system (BMS) is provided, the sequences of computer-executable instructions including instructions that instruct at least one processor to receive a BMS-shutdown signal from the BMS, and output, in response to receiving the BMS-shutdown signal, a low-battery signal to the UPS to instruct the UPS to execute a safe shutdown procedure.

In at least one example, the bridge device includes at least one power interface configured to be coupled to at least one battery of the at least one battery system, and wherein the instructions further instruct the at least one processor to determine a discharge threshold of the at least one battery, and communicate the discharge threshold to the UPS. In at least one example, the bridge device includes at least one power interface configured to be coupled to at least one battery of the at least one battery system, and the BMS-shutdown signal is indicative of a charge level of the at least one battery, the instructions further instructing the at least one processor to determine, based on the charge level of the at least one battery, whether the at least one battery is below a discharge threshold.

In at least one example, the instructions further instruct the at least one processor to output the low-battery signal in response to determining that the at least one battery is below the discharge threshold. In at least one example, the instructions further instruct the at least one processor to communicate with the UPS to determine a model of the UPS. In at least one example, the instructions further instruct the at least one processor to determine, based on the model of the UPS, a communication protocol to use to communicate with the UPS.

According to at least one example, a method of operating a bridge device having at least one communication interface configured to be coupled to at least one uninterruptible power supply (UPS) and to at least one battery system comprising a battery-management system (BMS) is provided, the method comprising receiving a BMS-shutdown signal from the BMS, and outputting, in response to receiving the BMS-shutdown signal, a low-battery signal to the UPS to instruct the UPS to execute a safe shutdown procedure.

In at least one example, the bridge device includes at least one power interface configured to be coupled to at least one battery of the at least one battery system, the method further comprising determining a discharge threshold of the at least one battery, and communicating the discharge threshold to the UPS.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 illustrates a block diagram of a power system according to an example;
FIG. 2 illustrates a process of operating the power system according to an example; and
FIG. 3 illustrates a schematic diagram of a spike-absorption circuit according to an example.

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms. In addition, in the event of inconsistent usages of terms between this document and documents incorporated herein by reference, the term usage in the incorporated features is supplementary to that of this document; for irreconcilable differences, the term usage in this document controls. The indefinite article "a" should be understood as meaning "at least one" or "one or more".

Uninterruptible power supplies (UPSs) provide uninterrupted output power to one or more loads. UPSs may be coupled to a primary power source, such as a utility mains supply, and a secondary power source, such as a battery. If primary power is available from the primary power source, the UPS may derive the output power from the primary power. The UPS may also recharge the battery using the primary power. If primary power is not available from the primary power source, the UPS may derive the output power from secondary power supplied by the battery.

Multiple types of batteries exist, including lithium-ion batteries, lead-acid batteries, and other types of batteries. Many UPSs are equipped to be connected to lead-acid batteries. Lithium-ion batteries are increasing in popularity, but UPSs configured to operate with lead-acid batteries (also referred to as "lead-acid UPSs") may not be innately configured to operate with lithium-ion batteries (also referred to as "lithium-ion UPSs"). For example, lithium-ion-battery systems may include a battery management system (BMS) configured to communicate with a UPS to which the lithium-ion battery provides power. Lead-acid-battery systems may lack such BMSs. Accordingly, lead-acid UPSs may not be configured to communicate with BMSs often used in lithium-ion-battery systems. For example, lead-acid UPSs may not be configured to communicate according to a communication protocol that the BMS uses.

In addition, certain operating parameters of a lead-acid battery, such as a charge voltage (that is, a voltage below which the battery should be recharged) and a discharge voltage (that is, a voltage at which the battery may be considered discharged) may differ from those of lithium-ion battery. For example, whereas a charge voltage and a discharge voltage of an example lead-acid battery may be approximately 220V and 160V, respectively, a charge voltage and a discharge voltage of an example lithium-ion battery may be approximately 210V and 175V, respectively. A discharge curve of a lead-acid battery may also be different from a discharge curve of a lithium-ion battery.

In some examples, lead-acid UPSs may receive firmware and/or hardware updates to enable the UPSs to fully interface with lithium-ion batteries. Such updates may enable the lead-acid UPS to communicate with lithium-ion-battery BMSs, as well as provide certain operating-parameter information (for example, charge voltage, discharge voltage, discharge curves, and so forth) to the UPS. The UPS may thus be able to interface with the lithium-ion battery. However, the firmware update may be inconvenient and time-consuming for a user to perform.

Examples of the disclosure provide a bridge kit (also referred to as a "bridge device" or a "bridging device") to enable a lead-acid UPS to interface effectively with a lithium-ion battery. The bridge kit is configured to interface with a UPS and with a lithium-ion battery. The bridge kit acts as a bridge between the UPS and the lithium-ion battery (which may include, for example, a BMS) by communicating with both the UPS and the lithium-ion battery. The bridge kit may also communicate with other devices, including local devices (for example, a local monitoring PC) and/or remote devices (for example, via a communication gateway) such that the UPS is capable of communicating, via the bridge kit, with a wide variety of devices. The bridge kit may also provide additional functionality, such as by providing a spike-absorption circuit to mitigate certain high-voltage events (for example, high-voltage spikes). Accordingly, the bridge kit may enable a lead-acid UPS to interface with a lithium-ion-battery system without requiring any firmware updates to the UPS.

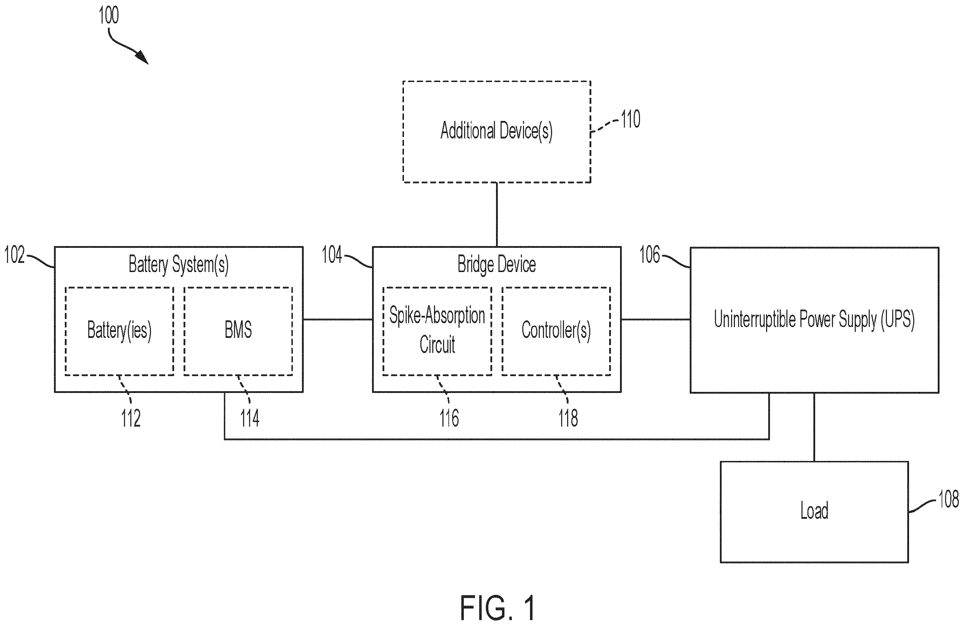

FIG. 1 illustrates a block diagram of a power system 100 according to an example. The power system 100 includes one or more battery systems 102 ("battery system 102"), a bridge device 104, a UPS 106, a load 108, and, optionally, one or more additional devices 110 ("additional devices 110"). The battery system 102 includes at least one battery 112 ("battery 112") and a battery-management system 114 ("BMS 114"). The bridge kit 104 optionally includes a spike-absorption circuit 116 and at least one controller 118.

The battery system 102 is coupled to the bridge device 104 and to the UPS 106. The bridge device 104 is coupled to the battery system 102, the UPS 106, and the additional devices 110. The UPS 106 is coupled to the battery system 102, the bridge device 104, and the load 108. The load 108 is coupled to the UPS 106. The additional devices 110 are coupled to the bridge device 104.

In examples in which the optional additional devices 110 are included, the additional devices 110 may include, for example, computing devices (for example, personal computers, desktops, laptops, and so forth), networking equipment (for example, a gateway, router, modem, and so forth) to enable the bridge device 104 to communicate with other networked devices, and so forth.

In some examples, the bridge device 104 may enable the UPS 106 to communicate with the additional devices 110. For example, where the additional devices 110 include a computing device, the bridge device 104 may pass communications from the computing device to the UPS 106, and/or from the UPS 106 to the computing device. In some examples, the UPS 106 may be directly coupled to one or more of the additional devices 110. For example, the additional devices 110 may include at least one network-management card (NMC), and the UPS 106 may be coupled directly to the NMC. The UPS 106 may be communicatively coupled to the load 108 in some examples (for example, where the load 108 is a computing device, such as a personal computer), or may not be communicatively coupled to the load 108 in other examples (for example, where the load 108 is a lighting system).

In various examples, the battery 112 includes one or more lithium-ion batteries. However, the UPS 106 may be configured to interface with lead-acid batteries. The bridge device 104 may act as a bridge to enable the UPS 106 to interface effectively with the battery system 102, even though the battery 112 may include lithium-ion batteries rather than lead-acid batteries.

In normal operation (for example, when primary AC power is available), the UPS 106 receives primary AC power from a main power source and provides output power derived therefrom to the load 108. The UPS 106 may also provide recharging power derived from the primary AC power to the battery system 102 (for example, if the battery 112 is not fully charged). The battery system 102 may stop drawing recharging power from the UPS 106 if the battery 112 becomes fully charged. For example, the BMS 114 may disconnect a charging input circuit in the battery system 102 to stop drawing power. Disconnecting the charging input circuit may cause a pulse of high voltage (or "voltage spike") to appear between the UPS 106 and the battery system 102. In examples in which the spike-absorption circuit 116 is included, the spike-absorption circuit 116 may absorb and attenuate the high-voltage pulse. For example, the spike-absorption circuit 116 may include a snubber circuit to suppress unintended voltage transients, such as the high-voltage pulse.

In backup operation (for example, when primary AC power is not available), the UPS 106 receives battery power from the battery 112 and provides output power derived therefrom to the load 108. The battery 112 may continue providing power to the UPS 106 until primary AC power is again available, or until the battery 112 is discharged below a discharge threshold. In some examples, a discharge threshold (that is, a threshold corresponding to a discharged condition of the battery 112 at which the battery 112 stops discharging) may be expressed as a discharge voltage. The discharge threshold may be determined by the bridge device 104. In some examples, the BMS 114 may communicate the discharge threshold to the bridge device 104. The bridge device 104 may communicate information indicative of the discharge threshold to the UPS 106.

If the bridge device 104 determines that the battery 112 is approaching the discharge threshold and will soon stop providing power to the UPS 106, the bridge device 104 may generate a warning message. For example, the bridge device 104 may monitor a current voltage of the battery 112 (by the controller 118 directly measuring the voltage and/or polling the battery system 102 for voltage information, for example) and may determine that the current voltage will soon fall below a discharge voltage. Although the UPS 106 may not be configured to communicate directly with the battery system 102 to receive the warning message, the bridge device 104 may be configured to send a message to the UPS 106, the message being structured according to a communication protocol understood by the UPS 106. Accordingly, the bridge device 104 may send a low-battery message to the UPS 106 responsive to receiving the warning message from the battery system 102, and the UPS 106 may execute safe shutdown procedure.

In some examples, executing a safe shutdown procedure includes instructing a load powered by the UPS 106 (for example, the load 108) to begin shutting down. For example, if the load 108 is a computing device (for example, a personal computer) to which the UPS 106 is communicatively coupled, the UPS 106 may instruct the computing device to begin shutting down. The UPS 106 itself may then safely shut down. In various examples, initiating a safe shutdown procedure includes the UPS 106 itself safely shutting down without instructing the load 108 to shut down. For example, where the UPS 106 is not communicatively coupled to the load 108 (such as where the load 108 is a lighting system, for example), the UPS 106 may not instruct the load 108 to begin shutting down.

The bridge device 104 may be equipped to communicate according to a variety of communication protocols, each of which may correspond to a respective type or types of UPS and/or a respective type or types of BMS. Accordingly, provided that the bridge device 104 is equipped to communicate according to the communication protocol of the UPS 106 and/or BMS 114 to which the bridge device 104 is connected, the bridge device 104 enables the UPS 106 to communicate with a lithium-ion BMS and/or other external devices. The bridge device 104 may thus act as an external communication interface for the UPS 106 and the BMS 114, enabling the UPS 106 to communicate with the BMS 114 and thereby receive low-battery warnings and other messages, charge-threshold information, discharge-threshold information, discharge-curve information, and so forth.

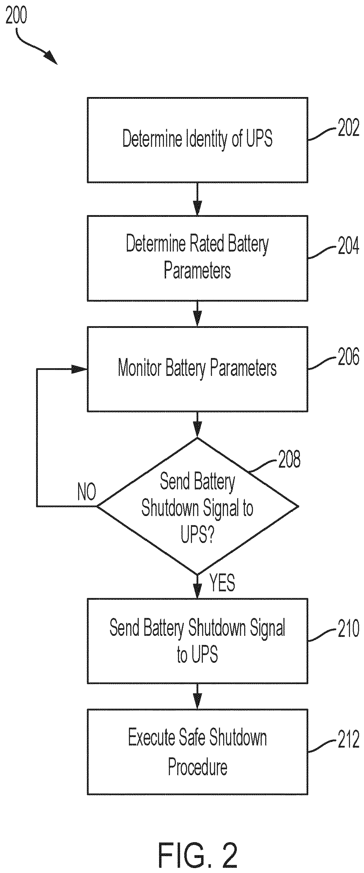

FIG. 2 illustrates a process 200 of operating the bridge device 104 according to an example. The process 200 may be executed at least in part by the controller 118 in some examples. In various examples, actions described as being performed by the bridge device 104 may be performed by the controller 118. For purposes of example, the process 200 is describes as beginning when the bridge device 104 is initially powered up.

At act 202, the bridge device 104 determines identifying information of the UPS 106. For example, the identifying information may include model information indicative of a model of the UPS 106. The controller 118 may communicate with the UPS 106 to obtain the identifying information. The bridge device 104 may determine which communication protocol to use to communicate with that model of UPS 106 based on the model information. For example, the controller 118 may access a database identifying which communication protocols are based by which UPS models. The bridge device 104 may be configured to communicate according to any of a variety of communication protocols, each corresponding to a different model of UPS.

At act 204, the bridge device 104 determines rated battery parameters corresponding to the UPS 106. For example, the controller 118 may determine battery parameters based on the model of the UPS 106. The battery parameters may be indicative of the battery 112. The battery parameters may include, for example, a charge threshold, a discharge threshold, a maximum charge of the battery 112, a maximum runtime of the battery 112, an expected lifetime of the battery 112, and so forth.

At act 206, the bridge device 104 may begin monitoring the battery 112 for battery parameters that might form the basis of UPS 106 shutdown, such as a voltage of the battery 112, a discharge current of the battery 112, a state of charge (SOC) of the battery 112, a current runtime of the battery 112, a temperature of the battery 112, and so forth. In various examples, the BMS 114 may send such battery parameters to the bridge device 104 periodically or aperiodically. In some examples, the controller 118 may be coupled to, and configured to measure a voltage at, a DC bus of the battery 112 to determine one or more of the battery parameters. The bridge device 104 may use the battery parameters to determine whether to inform the UPS 106 that battery power will be imminently unavailable, responsive to which the UPS 106 may initiate safe shutdown procedures. Accordingly, the controller 118 may obtain the battery parameters by direct measurement, by communicating with the BMS 114, or a combination thereof.

At act 208, the bridge device 104 determines whether to send a battery shutdown signal to the UPS 106. The battery shutdown signal may indicate that power will shortly no longer be available from the battery 112. For example, if the bridge device 104 determines that the battery 112 is at or nearly at a discharge threshold, the bridge device 104 may send a battery shutdown signal that includes a low-battery signal indicative of the low battery power to the UPS 106. In some examples, the bridge device 104 may send the battery shutdown signal responsive to receiving a BMS-shutdown signal from the BMS 114. The BMS-shutdown signal may include an instruction from the BMS 114 indicating that the battery 112 will shut down shortly (for example, in 30 seconds, one minute, two minutes, or another period of time). In another example, the BMS-shutdown signal may include information indicative of a remaining runtime of the battery 112, which the controller 118 may use to determine, for example, whether the battery 112 is below a discharge threshold. In various examples, the bridge device 104 may independently determine that the battery 112 will shut down shortly in addition to, or in lieu of, receiving the BMS-shutdown signal. For example, the controller 118 may determine, based on the battery parameters acquired at act 206, a remaining SOC of the battery 112, and may determine a remaining runtime of the battery 112 based on the remaining SOC. Accordingly, in various examples, act 208 may include determining whether the remaining charge or runtime of the battery 112 is below a discharge threshold or discharge runtime, for example.

In some examples, act 208 may additionally or alternatively include determining whether the battery 112 should be shut down for reasons other than, or in addition to, the battery 112 being discharged. For example, act 208 may include determining (for example, by the controller 118) whether the battery 112 is experiencing a shutdown condition such as having an ambient temperature outside of an acceptable temperature range or other conditions potentially indicative of the battery 112 being operated at non-rated conditions.

If the bridge device 104 determines not to send a battery shutdown signal (208 NO), then the process returns to act 206. The process 200 continues with the bridge device 104 monitoring battery parameters, such as parameters that may indicate a remaining runtime of the battery 112. Acts 206 and 208 may be repeated until the bridge device 104 determines to send a battery shutdown signal (208 YES). In some examples, the process 200 (and, for example, the iterative execution of acts 206 and 208) may also be interrupted by main power returning to the UPS 106 and the UPS 106 returning to a normal mode of operation.

At act 210, the bridge device 104 sends a battery shutdown signal to the UPS 106. The battery shutdown signal may indicate that the battery 112 will shut down within a certain period of time, and that the UPS 106 should prepare to operate without power from the battery 112. In some examples, the battery shutdown signal may be sent because the battery 112 is nearly discharged, and the battery shutdown signal may include a low-battery signal. In other examples, the battery shutdown signal may be sent because the battery 112 is operating under certain non-rated conditions, such as excessively high temperatures or with an excessively high current. In still other examples, the battery shutdown signal may be sent because of another condition that will lead to the battery 112 being shut down. The battery shutdown signal enables the UPS 106 to execute a safe shutdown procedure rather than waiting for power from the battery 112 to be abruptly unavailable.

At act 212, the UPS 106 executes a safe shutdown procedure. Executing the safe shutdown procedure may include outputting a load-shutdown signal to the load 108. For example, if the UPS 106 is communicatively coupled to the load 108 (for example, a computing device such as a PC), the load-shutdown signal may indicate that the load 108 should initiate a safe shutdown before power from the UPS 106 is unavailable. The load 108 may therefore initiate a safe shutdown procedure in response to receiving the load-shutdown signal. Executing a safe shutdown may additionally or alternatively include the UPS 106 itself safely shutting down, such as by shutting down one or more components of the UPS 106 in a desired order and/or manner. In some examples, executing the safe shutdown procedure includes the UPS 106 itself safely shutting down and does not include sending the load-shutdown signal to the load 108. In various examples, the battery shutdowns signal sent by the bridge device 104 may be sent with enough of a time buffer before the battery 112 shuts down to enable the UPS 106 and/or load 108 to execute the safe shutdown procedures.

Accordingly, the bridge device 104 may enable communications to be exchanged between various devices, including the UPS 106, the battery system 102, and/or the additional devices 110, which may include, for example, one or more computing devices (for example, PCs). In some examples, the bridge device 104 includes a central bridge which may act as a leader device (for example, a leader of both the UPS 106 and the battery system 102) for facilitating communication between other components.

In at least one embodiment, the bridge device 104 may communicate with any of the UPS 106 and/or the additional devices 110 via the UPS-Link (RS232) communication protocol. For example, to communicate with the UPS 106, the bridge device 104 may determine whether the UPS 106 includes or is coupled to an NMC. If the UPS 106 does implement an NMC, the bridge device 104 may provide a communication channel to the NMC to enable the NMC to communicate with the UPS 106 via the bridge device 104. To communicate with external devices such as a computing device (for example, for setup software), the bridge device 104 may be coupled to and communicate with the computing device via a RS232 serial port. If a computing device for protecting and monitoring operation of the power system 100 is implemented, the bridge device 104 may select a communication channel and communicate with the computing device via a desired communication protocol, which may be a communication protocol unique to the UPS 106. To communicate with others of the additional devices 110, such as external cloud devices, the bridge device 104 may send communications via a network gateway which may also be a component of the additional devices 110.

The bridge device 104 may include one or more wired communication ports to communicate with the BMS 114, such as a CAN bus or Modbus port. In other examples, the bridge device 104 may be coupled to the BMS 114 via one or more wireless communication interfaces. In some examples, the UPS 106 may include or be coupled to a charger to recharge the battery 112. The charger may include an ADC which may provide digital data indicative of operation of the charger directly to bridge device 104 . In some examples, the bridge device 104 may also be coupled to a display port, which may be coupled to a display device to display information. For example, such a display may be a component of the additional devices 110.

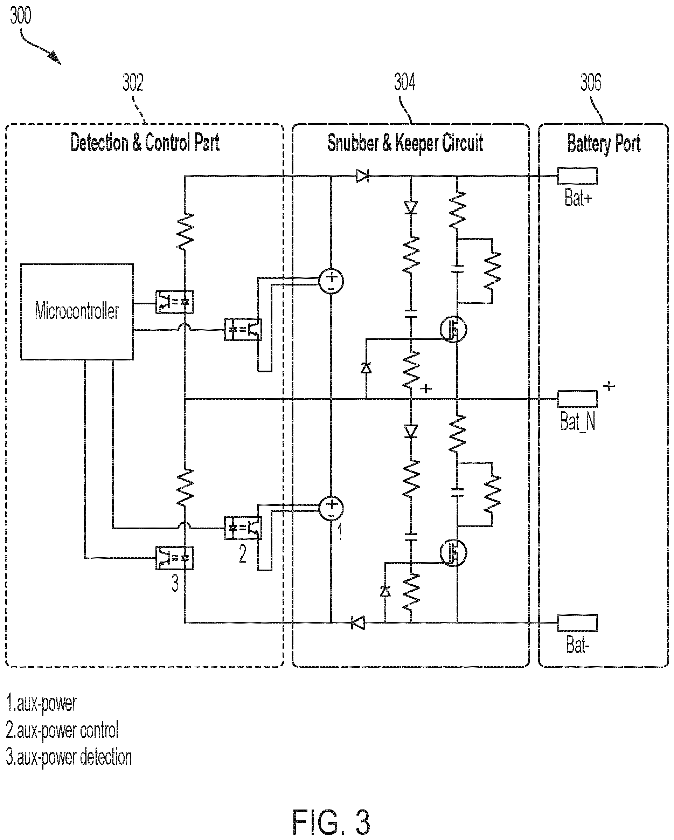

As discussed above, the bridge device 104 may include the spike-absorption circuit 116 in some examples. FIG. 3 illustrates a schematic diagram of the spike-absorption circuit 116 according to an example. The spike-absorption circuit 116 includes a detection and control portion 300, a snubber and keeper circuit portion 304, and a battery port portion 306.

The battery port portion 306 includes battery connections to couple to terminals of a battery, such as a positive, neutral, and negative terminal of the battery 112. The snubber and keeper circuit portion 304, as discussed above, is configured to absorb high-voltage spikes. The high-voltage spikes may be present at the battery port portion 306 responsive to, for example, turn-on and turn-off of the battery 112. The snubber and keeper circuit portion 304 may be designed to absorb voltage transients having a value substantially in excess of the normal operating voltage of the battery 112, as may occur during turn-on and turn-off of the battery 112. The snubber and keeper circuit portion 304 may also include an auxiliary power supply. The snubber and keeper circuit portion 304 may be configured to maintain a voltage at a desired level at the battery port portion 306.

The detection and control portion 302 may be configured to control and/or monitor operation of the snubber and keeper circuit portion 304. For example, the detection and control portion 302 may be configured to control the snubber and keeper circuit portion 304 to maintain the battery port connections at a desired voltage level. The detection and control portion 302 may also monitor parameters of the snubber and keeper circuit portion 304 (for example, a voltage and/or current at one or more locations in the circuits) to determine whether the circuits are operating as intended.

Accordingly, examples discussed above include a bridge device 104 to provide at least a communication interface between UPSs, BMSs, and, in some examples, additional devices. The bridge device 104 may receive information from the UPS 106 and BMS 112 and determine appropriate action to take based on the information. For example, the bridge device 104 may collect battery parameters from the BMS 112 and, in response to determining that the battery 112 is almost discharged, provide a signal to the UPS 106 indicative of the imminent battery-power unavailability. The bridge device 104 may provide such a signal to the UPS 106 structured according to a communication protocol that the UPS 106 is configured to implement, but which the BMS 112 may not be configured to implement. Thus, the bridge device 104 may enable the UPS 106 to interface with devices, such as battery systems, that the UPS 106 would not otherwise be able to natively interface with. The bridge device 104 may further act as an external communication interface to enable the UPS 106 and/or BMS 112 to communicate, via the bridge device 104, with various external devices including local PCs and/or remote cloud devices. In various examples, the bridge device 104 may further include the spike-absorption circuit 116 to attenuate high-voltage pulses produced in response to the battery system 112 disconnecting a charging circuit.

In various examples, the bridge device 104 may enable a UPS configured to interface with a lead-acid battery to be able to interface with a lithium-ion battery. In other examples, the bridge device 104 may act as an interface between UPSs configured to interface with batteries other than lead-acid batteries to be able to interface with batteries other than lithium-ion batteries. Accordingly, examples of lead-acid UPSs and lithium-ion batteries are provided for purposes of example rather than limitation.

Various controllers, such as the controller 118, may execute various operations discussed above. Using data stored in associated memory and/or storage, the controller 118 also executes one or more instructions stored on one or more non-transitory computer-readable media, which the controller 118 may include and/or be coupled to, that may result in manipulated data. In some examples, the controller 118 may include one or more processors or other types of controllers. In one example, the controller 118 is or includes at least one processor. In another example, the controller 118 performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Having thus described several aspects of at least one embodiment, it is to be appreciated various alterations, modifications, and improvements will readily occur to those skilled in the art. Such alterations, modifications, and improvements are intended to be part of, and within the scope of, this disclosure. Accordingly, the foregoing description and drawings are by way of example only.

Further examples are proposed in the following clauses:
Clause 1. A bridge device comprising:
   at least one communication interface configured to be coupled to at least one uninterruptible power supply (UPS) and to at least one battery system comprising a battery-management system (BMS); and
   at least one controller configured to
      receive a BMS-shutdown signal from the BMS, and
   output, in response to receiving the BMS-shutdown signal, a low-battery signal to the UPS to instruct the UPS to execute a safe shutdown procedure.
Clause 2. The bridge device of clause 1, further comprising at least one power interface configured to be coupled to at least one battery of the at least one battery system.
Clause 3. The bridge device of clause 2, wherein the at least one controller is further configured to:
   determine a discharge threshold of the at least one battery; and
   communicate the discharge threshold to the UPS.
Clause 4. The bridge device of clause 2, wherein the BMS-shutdown signal is indicative of a charge level of the at least one battery, and wherein the at least one controller is further configured to determine, based on the charge level of the at least one battery, whether the at least one battery is below a discharge threshold.
Clause 5. The bridge device of clause 4, wherein the at least one controller is further configured to output the low-battery signal in response to determining that the at least one battery is below the discharge threshold.
Clause 6. The bridge device of clause 2, further comprising one or more sensors coupled to the at least one controller, and wherein the at least one controller is further configured to determine, based on sensed information received from the one or more sensors, battery parameters indicative of a charge level of the at least one battery.
Clause 7. The bridge device of clause 6, wherein the at least one controller is further configured to output the low-battery signal to the UPS responsive to determining that the battery parameters are indicative of the charge level of the at least one battery being below a discharge threshold.
Clause 8. The bridge device of clause 1, wherein the at least one controller is further configured to communicate with the UPS to determine a model of the UPS.
Clause 9. The bridge device of clause 8, wherein the at least one controller is further configured to determine, based on the model of the UPS, a communication protocol to use to communicate with the UPS.
Clause 10. The bridge device of clause 1, further comprising a spike-absorption circuit.
Clause 11. The bridge device of clause 10, wherein the spike-absorption circuit includes at least one snubber circuit.
Clause 12. The bridge device of clause 11, wherein the at least one snubber circuit is configured to absorb high-voltage spikes from the at least one battery system.
Clause 13. At least one non-transitory computer-readable medium storing thereon sequences of computer-executable instructions for operating a bridge device having at least one communication interface configured to be coupled to at least one uninterruptible power supply (UPS) and to at least one battery system comprising a battery-management system (BMS), the sequences of computer-executable instructions including instructions that instruct at least one processor to:
   receive a BMS-shutdown signal from the BMS, and
   output, in response to receiving the BMS-shutdown signal, a low-battery signal to the UPS to instruct the UPS to execute a safe shutdown procedure.
Clause 14. The at least one non-transitory computer-readable medium of clause 13, wherein the bridge device includes at least one power interface configured to be coupled to at least one battery of the at least one battery system, and wherein the instructions further instruct the at least one processor to:
   determine a discharge threshold of the at least one battery; and
   communicate the discharge threshold to the UPS.
Clause 15. The at least one non-transitory computer-readable medium of clause 13, wherein the bridge device includes at least one power interface configured to be coupled to at least one battery of the at least one battery system, and wherein the BMS-shutdown signal is indicative of a charge level of the at least one battery, the instructions further instructing the at least one processor to determine, based on the charge level of the at least one battery, whether the at least one battery is below a discharge threshold.
Clause 16. The at least one non-transitory computer-readable medium of clause 15, wherein the instructions further instruct the at least one processor to output the low-battery signal in response to determining that the at least one battery is below the discharge threshold.
Clause 17. The at least one non-transitory computer-readable medium of clause 13, wherein the instructions further instruct the at least one processor to communicate with the UPS to determine a model of the UPS.
Clause 18. The at least one non-transitory computer-readable medium of clause 17, wherein the instructions further instruct the at least one processor to determine, based on the model of the UPS, a communication protocol to use to communicate with the UPS.
Clause 19. A method of operating a bridge device having at least one communication interface configured to be coupled to at least one uninterruptible power supply (UPS) and to at least one battery system comprising a battery-management system (BMS), the method comprising:
   receiving a BMS-shutdown signal from the BMS, and
   outputting, in response to receiving the BMS-shutdown signal, a low-battery signal to the UPS to instruct the UPS to execute a safe shutdown procedure.
Clause 20. The method of clause 19, wherein the bridge device includes at least one power interface configured to be coupled to at least one battery of the at least one battery system, the method further comprising:
   determining a discharge threshold of the at least one battery; and
   communicating the discharge threshold to the UPS.

## Claims

1. A bridge device comprising:
at least one communication interface configured to be coupled to at least one uninterruptible power supply (UPS) and to at least one battery system comprising a battery-management system (BMS); and
at least one controller configured to
receive a BMS-shutdown signal from the BMS, and
output, in response to receiving the BMS-shutdown signal, a low-battery signal to the UPS to instruct the UPS to execute a safe shutdown procedure.

2. The bridge device of claim 1, further comprising at least one power interface configured to be coupled to at least one battery of the at least one battery system.

3. The bridge device of claim 2, wherein the at least one controller is further configured to:
determine a discharge threshold of the at least one battery; and
communicate the discharge threshold to the UPS.

4. The bridge device of claim 2, wherein the BMS-shutdown signal is indicative of a charge level of the at least one battery, and wherein the at least one controller is further configured to determine, based on the charge level of the at least one battery, whether the at least one battery is below a discharge threshold, wherein the at least one controller is preferably further configured to output the low-battery signal in response to determining that the at least one battery is below the discharge threshold.

5. The bridge device of claim 2, further comprising one or more sensors coupled to the at least one controller, and wherein the at least one controller is further configured to determine, based on sensed information received from the one or more sensors, battery parameters indicative of a charge level of the at least one battery, wherein the at least one controller is preferably further configured to output the low-battery signal to the UPS responsive to determining that the battery parameters are indicative of the charge level of the at least one battery being below a discharge threshold.

6. The bridge device of any of the above claims, wherein the at least one controller is further configured to communicate with the UPS to determine a model of the UPS.

7. The bridge device of claim 6, wherein the at least one controller is further configured to determine, based on the model of the UPS, a communication protocol to use to communicate with the UPS.

8. The bridge device of any of the above claims, further comprising a spike-absorption circuit, wherein the spike-absorption circuit preferably includes at least one snubber circuit, wherein the at least one snubber circuit is preferably configured to absorb high-voltage spikes from the at least one battery system.

9. A computer implemented method of operating a bridge device having at least one communication interface configured to be coupled to at least one uninterruptible power supply (UPS) and to at least one battery system comprising a battery-management system (BMS), the method comprising:
receiving a BMS-shutdown signal from the BMS, and
outputting, in response to receiving the BMS-shutdown signal, a low-battery signal to the UPS to instruct the UPS to execute a safe shutdown procedure.

10. The method of claim 9, wherein the bridge device includes at least one power interface configured to be coupled to at least one battery of the at least one battery system, the method further comprising:
determining a discharge threshold of the at least one battery; and
communicating the discharge threshold to the UPS.

11. The method of claim 9, wherein the bridge device includes at least one power interface configured to be coupled to at least one battery of the at least one battery system, and wherein the BMS-shutdown signal is indicative of a charge level of the at least one battery, the method further comprising determining, based on the charge level of the at least one battery, whether the at least one battery is below a discharge threshold, wherein the method preferably further comprises outputting the low-battery signal in response to determining that the at least one battery is below the discharge threshold.

12. The method of claim 9, wherein the bridge device includes at least one power interface configured to be coupled to at least one battery of the at least one battery system, the bridge further comprising one or more sensors coupled to the at least one controller, the method comprising determining, based on sensed information received from the one or more sensors, battery parameters indicative of a charge level of the at least one battery, the method preferably further comprising outputting the low-battery signal to the UPS responsive to determining that the battery parameters are indicative of the charge level of the at least one battery being below a discharge threshold.

13. The method of any of claims 9 to 12, wherein the method further comprise communicating with the UPS to determine a model of the UPS, wherein the method preferably further comprises determining, based on the model of the UPS, a communication protocol to use to communicate with the UPS.

14. The method of any of claims 9 to 13, wherein the bridge device includes further comprises a spike-absorption circuit, wherein the spike-absorption circuit preferably includes at least one snubber circuit, wherein the method preferably comprises the at least one snubber circuit absorbing high-voltage spikes from the at least one battery system.

15. At least one non-transitory computer-readable medium storing thereon sequences of computer-executable instructions for operating a bridge device having at least one communication interface configured to be coupled to at least one uninterruptible power supply (UPS) and to at least one battery system comprising a battery-management system (BMS), the sequences of computer-executable instructions including instructions that instruct at least one processor to operate according to any of the method claims 9 to 14.
